# EUROPEAN PATENT APPLICATION

(11) **EP 2 014 447 A2**
(43) Date of publication of application: **14.01.2009**
(21) Application number: 08010239.5
(22) Date of filing: 05.06.2008
(51) Int. Cl.: B29C 67/24, B28B 15/00, B28B 7/34, B28B 7/36

(54) **Method, plant and trays for manufacturing plates and tiles of synthetic material containing inserts, and plates and tiles obtained**

(30) Priority: 11.06.2007 IT MI20071170
(71) Applicant: MORETTI INTERNATIONAL S.R.L., 20010 Arluno MI (IT)
(72) Inventor: Moretti, Fabio, I-20010 Arluno (IT)
(74) Representative: Zanella, Ireneo

(57) **Abstract**

Plates (6) and tiles (1) are proposed, formed by a layer of pebbles (3) built-in in a layer (4) of colourless or coloured transparent synthetic material with plane upper side and coated with a layer (29) of hard synthetic material, which plates (6) and tiles (1) are manufactured with trays (7) of or coated with anti-adherent synthetic material by means of a method and a plant allowing a drastic reduction in the manufacturing time.

The produced plates (6) and tiles (1) have a high resistance to trampling and scratches, as well as a high stability in the plain shape thereof.

## Description

### Description of the invention

### Technical field

The present invention relates to trays, to a method and to a plant with said trays for manufacturing plates and tiles of synthetic material containing built-in inserts, such as stones, pebbles, shells, that is various inserts, as well as to plates and tiles obtained therewith, for flooring or coating, for example, bathrooms, kitchens, housing rooms, arcades, pieces of furniture such as tables, pieces of furniture for kitchen or bar, and so on, according to the preambles of the independent claims 1, 4, 6 and 11.

### Background of the invention

In order to avoid repetitions, hereinafter the term of "pebbles" is generally used, as representative term for stones, marble pebbles, shells, coffee grains and other inserts, as well as the term of "tiles", generally as representative term of plates to be used as such or to be cut, in known way, in order to obtain smaller plates or tiles, by cutting said plates.

Tiles in synthetic material, such as epoxy resin, are known, manufactured by the Italian firm Assioma Design, in Sossano, Vicenza, which incorporate pebbles which, in the finished plates/tiles, constitute the bottom thereof and they are covered on the upper portion by a thin layer of epoxy resin. The manufacturing of such tiles takes place according to a substantially manual process. At first, in a flat mould made of steel, called "tray", more layers, for example three layers, of an anti-adherence agent are applied in sequence, by means of manual spraying, wherein the drying time for each layer is quite high, in the order of about 45 minutes.

After applying and drying in the tray the last layer of anti-adherence agent, on the latter a layer or bed of epoxy resin is applied, whereon a layer of pebbles is then applied and manually levelled, wherein after the resin hardening the plate/tile is overturned and calibrated onto the bottom, formed by the pebbles, in order to bring it to the wished thickness.

The known tiles in epoxy resin have several drawbacks and disadvantages due to both the used materials and the manual manufacturing procedure.

With respect to epoxy resin, the same has a hardness generally insufficient for trampling, that is for floorings, whereas the substantially manual manufacturing method requires extremely long times and, consequently, a very limited productivity. A considerable portion of these long manufacturing times is to be ascribed to the use of the anti-adherence agent to be applied onto the trays in order to avoid glueing the layer of epoxy resin and thus to facilitate an easy extraction of the tile. Then, it is to be noted that after a certain manufacturing time it is necessary to eliminate the greases caused by the pebbles by making the trays to be treated with a specific known treatment.

Tiles of the shown type are equally known, manufactured by the Italian firm Effepi Marmi, in Casciana Terma, Pisa, wherein as synthetic material the epoxy resin is replaced by polyester. Also these tiles have different disadvantages.

First of all the tile's outer surface made of polyester is never smooth, but as a result of the cooling behaviour of the polyester, it has a corrugated course with projecting pebbles and depressions, therefore the trampling abrasions disclose the projecting pebbles, which fact jeopardizes the aesthetical effect and allows the penetration of humidity and poured liquids, such as oil, cola, lemon, coffee, wine and so on. Furthermore, the depressions practically constitute receptacles for dirt and are difficult to be accessed for cleaning operations. It is suggested to waterproof the surface by applying a layer of wax for marble, which fact requires specific expensive operations which have to be repeated with a certain frequency. The polyester has a poor mechanical resistance, therefore after an inevitable wear, a regeneration operation by abrasion with subsequent waxing operation with wax for marble is suggested. As it is known, the polyester is a synthetic product which, as it could be said, survives also after hardening and the plates or tiles often appear to be bent, wherein the tiler before the installation should arrange the same onto a plane and let them "to rest" for several hours. The tiles of a same batch can have shades different therebetween, therefore during the installation it is suggested to open at least three or four boxes of tiles for a preliminary sorting thereof.

At last, it is observed that, in such tiles made of polyester, crackings or "cracks" negatively affecting the aesthetical aspect of such tiles with built-in pebbles often take place and that the humidity can modify the polyester colour, therefore a storage or laying thereof outside is suggested.

Despite this, the known transparent tiles both made of epoxy resin and polyester have acquired a certain renown and spreading, in particular among architects and interior designers for the use thereof mentioned above, that is, among other things, for floorings and coatings of bathrooms, kitchens and the like.

### Summary of the invention

The object underlying the present invention is to provide a method, a plant and trays for manufacturing plates/tiles of the subject type which do not have the drawbacks of the prior art, wherein by using the new trays the manufacturing times are drastically reduced and wherein the obtained plates/tiles have improved features of hardness/capability of being trampled, scratch-resistance and aplanarity.

The mentioned object is solved by a method, a plant and trays used therein, as well as with plates/tiles having the features shown in the independent claims 1, 4, 6 and 11.

Additional advantageous embodiments can be taken from the respective depending claims.

Several and important advantages are obtained with the teachings of the present invention.

First of all the replacement of the known steel trays with trays made of or coated with synthetic material, preferably silicone, allows exploiting the feature of intrinsic anti-adherence of the synthetic material, preferably silicone, thus avoiding completely the application of the known removable layers of anti-adherence agent and the related long drying times, necessary for the steel moulds.

On the other hand, it is to be noted that the replacement of the material of the trays in contact with the plates or tiles, that is steel with silicone (term used hereinafter as including all other equivalent anti-adherent materials) is neither obvious nor immediate, among other things, for the following considerations. The known steel trays are manufactured in steel, or other metal, analogously to known metal moulds (cast iron, steel, etc.) commonly used, for example, in injection moulding machines for items made of synthetic materials, wherein the metal/steel, as everybody knows, guarantees the manufacturing of a very high number of moulded products without deforming or wearing, that is without requesting the frequent replacement thereof. On the other hand, the manufacturing of steel moulds is very expensive and it is practically implemented only after a preliminary manufacturing of pilot moulds made of silicone, easy to be manufactured, but at the same time with very low features of mechanical resistance and which can wear quickly. Among the materials used to manufacture the mentioned pilot moulds, the use of synthetic materials, for example silicone, is known. Therefore, the known use of silicone to manufacture pilot moulds according to the known art is due neither to the capability thereof of being processed, nor to the features thereof of resistance or anti-adherence towards, among other things, synthetic materials.

Therefore the chosen proposal of silicone as material for producing moulds for the mass manufacturing of continuously-produced items goes exactly in the opposite direction with respect to the usual choice of the known art of using metal/steel for manufacturing moulds for the production in large scale of mouldable, that is shapeable, objects, for example, of synthetic materials.

This teaching allows using a method and a plant wherein the step of applying onto the trays several layers of anti-adherence agents requesting long hardening time is advantageously eliminated, which time could not be accepted in a method and plant apt to automatize the various production steps provided for the manufacturing of tiles made of synthetic material with inserts, that is pebbles.

The method and the plant according to the invention for manufacturing tiles made of synthetic material with pebbles using silicone trays allow shortening substantially the manufacturing time and reducing drastically the use of manpower.

The method and the plant according to the invention further advantageously provide artifices able to provide a substantially continuous manufacturing, notwithstanding the presence of inevitable waiting times for hardening the synthetic material. The choice, as synthetic material, of an epoxy resin, that is of a bi-component resin allows, on one side, to implement tiles with good hardness features of the synthetic material with respect to the tiles made of polyester and, on the other side, when on the other side the hardness feature can be improved by finishing the tiles with a thin layer of synthetic material with optimum hardness feature and capability of being trampled such as, for example, a polyurethane resin, which among other things can be hot hardened quickly.

By providing trays with a body or core of synthetic material or metal, for example aluminium, coated with anti-adherent material, the application of this adherent layer inside the tray, or onto the whole tray, can take place with any known process, that is by spraying, dipping and so on. An advantageous method has revealed to be the application method by depression, that is by applying a strong depression in an air gap formed between a tray and a small bag of anti-adherent material which has been tightly put in advance onto the tray. The use of adhesives is not necessary and the manufacturing is quick and economical.

### Brief description of the drawings

Additional features, advantages and details of the method, of the plant, of the used trays and of the obtained plates/tiles, according to the invention, can be further taken from the following description of a preferred embodiment of the invention provided by way of example and illustrated in the enclosed details, wherein:
figure 1 shows a top view of a plate or tile (according to the size) of the subject type,
figure 2 shows a perspective view of a mould, that a "tray", provided in anti-adherent synthetic material, preferably silicone, wherein in the illustrated example a plate is manufactured, which could be used as such, for example as covering plane for tables, pieces of furniture for kitchen, and so on, or it could be cut, for example, into four tiles, as shown with sketched lines;
figure 3 shows the first section A of a plant B, which first section A comprises three treatment stations arranged onto a conveyor belt and, more precisely, with a station for applying in the moulds a layer or bed of synthetic material, preferably of epoxy resin, with adjustable thickness, a station for pouring the pebbles in the tray and a station for levelling the pebbles onto the bottom of the tray,
figures 4, 5 and 6 show a cross-section through a tray respectively in the stations for applying the resin, for pouring the pebbles and for levelling the pebbles,
figure 7 shows a station for storing and hardening the synthetic material, that is the epoxy resin used for the tiles according to the invention, downwards the first section A of the plant B according to the invention,
figures 8 and 9 show, respectively, the second section or intermediate section C and the third and last section D of the plant B, which comprise the additional treatment stations onto a respective conveyor belt, wherein
figures 10 - 14 show cross-sections through the plates/tiles in said additional treatment stations of the plant B, as well as in the installation position (figure 14).

### Description of the preferred embodiments

The different figures are illustrated schematically and in convenient scales to make the illustration of the invention understandable in an easier way.

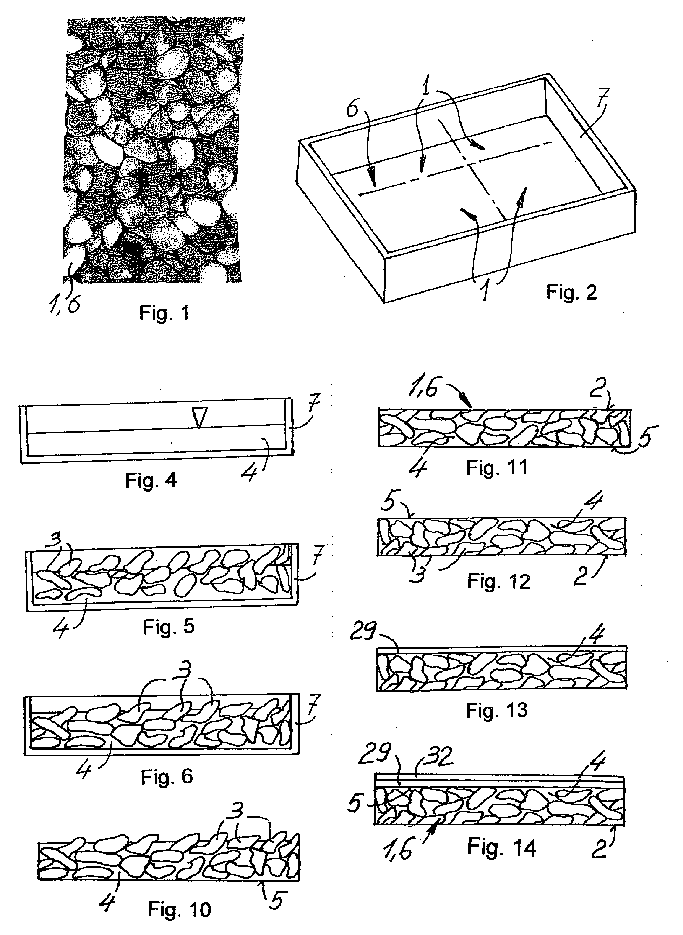

In particular from figure 14 it can be seen that the tiles 1 obtained with the method and a plant B according to the invention are formed by a lower or base portion 2 formed by a plurality of pebbles, 3, which are built-in in an upper portion 4 formed by a layer or bed of synthetic material, preferably epoxy resin, that is transparent or semitransparent, colourless or coloured, that is dark, bi-component resin, the upper side thereof is designated with 5, figure 10.

It is noted that a bi-component epoxy resin requires a hardening time, for example, of 36 hours.

The tiles 1 manufactured according to the invention have an aspect wholly similar to the known tiles in synthetic resin, wherein the manufacturing time and the features of mechanical resistance, that is resistance to trampling and scratch-resistance, are substantially different, as illustrated hereinafter.

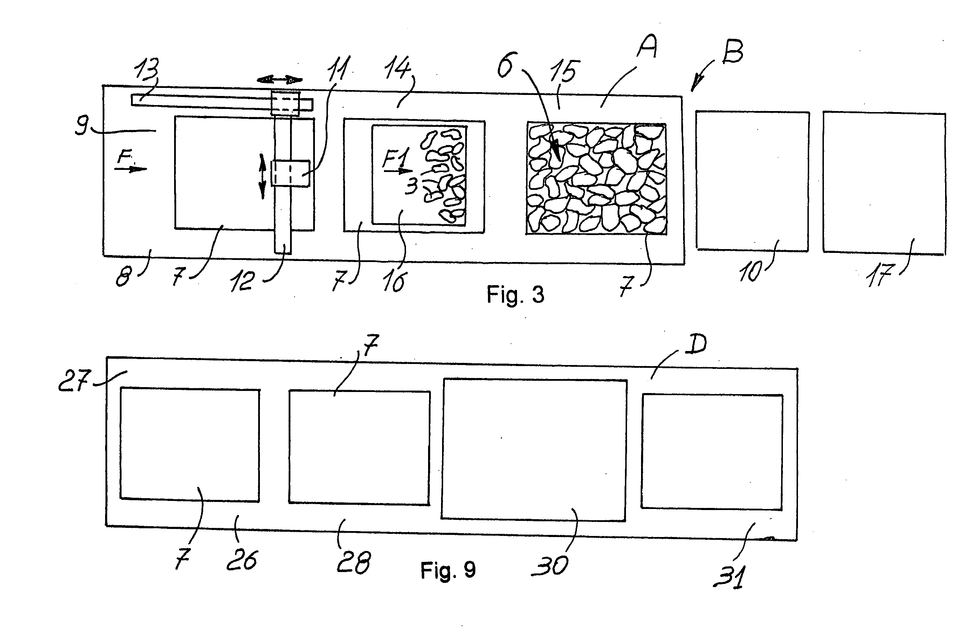

According to the invention the tiles 1, or the plates 6 (figure 3), the latter therefrom the tiles 1 can be then obtained by means of cuts, are obtained with moulds, that is "trays", 7 manufactured of or coated with silicone, or other suitable anti-adherent synthetic material, figure 2.

As illustrated above, the implementation of the trays 7 with at least the inner surface in contact with the plates 6 or tiles 1 provided with silicone allows an easy and immediate extraction of the tile 1 or plate 6 contained therein by means of simple overturning.

The method and the plant according to the invention for the manufacturing of tiles 1 provides in the first section or initial portion A (figure 3) a conveyor belt 8 whereon the trays 7 are fed one after the other one in a paced way and three subsequent processing stations are provided, and more precisely a first station 9 wherein onto the bottom of the trays 7 a layer or bed 4 of resin (figure 4) is first of all applied/inserted in order to incorporate the pebbles 3 therein. This resin insertion takes place, for example, by means of a not illustrated spray gun, which is supported in a so-called grab-like support 11, supported in a movable way for comings and goings onto a projected arm 12 involving the whole width of the tray 7. Furthermore, the arm 12 is mounted in a movable way for comings and goings like a slide onto a supporting profile 13 parallel with respect to the belt 8, so that the spray gun can spray/insert the resin onto the whole surface of the bottom of the tray 7, for a thickness of layer or bed settable at will. The resin application/insertion can take place with a belt 8 which is still or can be moved in the direction of the arrow F.

A station 14 for applying/inserting the pebbles 3 follows to the station 9 for applying/inserting the resin. In this station 14 above the tray 7 an upper endless conveyor belt 16 is provided, thereto the pebbles 3 are fed, for example, from a not illustrated tank or a loader, wherein said upper belt 16 makes the pebbles 3 to fall like a waterfall above the resin onto the bottom of the tray 7 during the feeding of the latter, wherein the pebbles incorporate by gravity in the resin bed 4, figure 5. A station 15 follows to the station 14, in which station 15 a levelling and pressing of the pebbles 3 towards the bottom of the tray 7 through the resin bed 4, for example by means of a not illustrated rammer, takes place, figure 6. Downwards the conveyor belt 8 a transit platform 10 is arranged, which can be adjusted in height and the task thereof is to ease the transfer of the trays 7 from the station 15 and the insertion thereof in a multi-storey carriage 17, that is of the rack-like type.

Figures 4, 5 and 6 correspond to the progressive stages for manufacturing the plates/tiles 6, respectively 1, in the stations 9, 14 and 15.

The sequence of the steps for applying the resin, for applying the pebbles and levelling the pebbles can take place substantially at the same time in the stations 9, 14 and 15, therefor a quite high manufacturing rate can be applied in this first section A of the plant B, including the transferring of the trays 7 from the levelling station 15 in the platform 16, wherein it is noted that the time for hardening the epoxy resin can be in the order of about 36 hours.

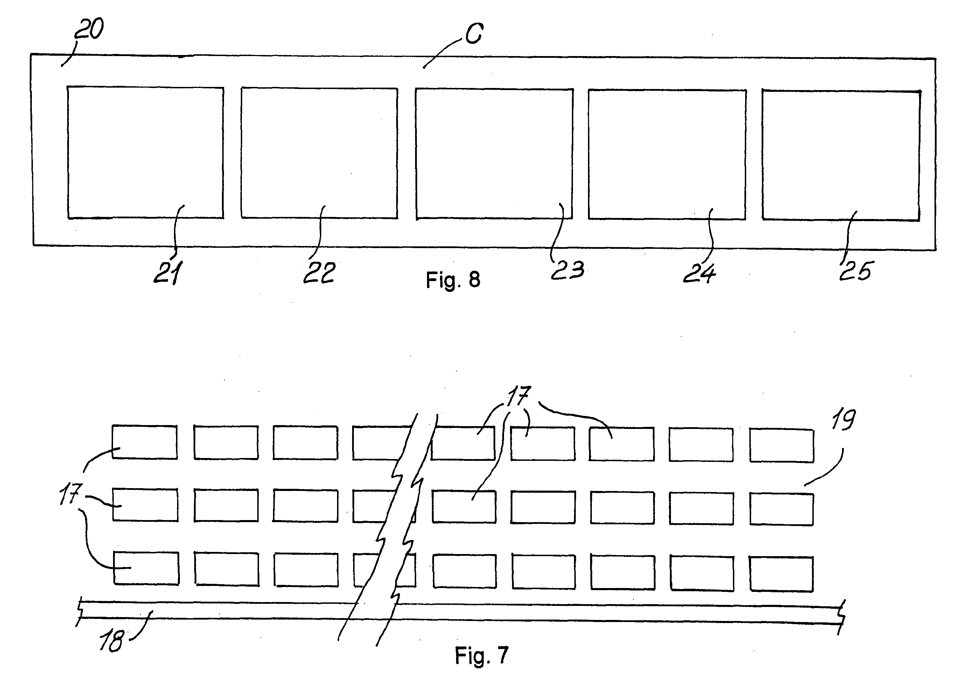

For this reason, then a storage of the carriages 17 containing the trays 7 takes place, which trays house the pebbles 3 built-in in the resin bed 4, with a progressive chessboard-like arrangement of the carriages 17, for example against a wall 18, figure 7, by forming for example a storage station or lung 19 with, for example, three parallel rows of carriages 17. From the storage station 19 it would be then possible to pick up in sequence the containment carriages 17 with trays 7 containing plates/tiles with layer or bed 4 of hardened epoxy resin and bring them to the inlet of the second section C (section or cut line) of the plant B, which section C is advantageously provided according to the invention, figure 8.

In this second portion C of the plant a station 21 for picking up the plate 6 from the tray 7, automatically or by means of an operator, and loading thereof with the upper side 5 onto a conveyor belt 20 is provided, figure 10.

From the loading station 21 the plate 6 arrives in an abrasion/calibration station 22, wherein the thickness of the plate 6 is determined by means of abrasion of the pebbles 3 on the side of the base 2 of the plate 6, figure 11.

If the manufacturing of tiles 1 by dividing a plate 6 is provided, the plate 6 is transferred from the calibration station 22 into a cutting and trimming station 23, wherein the plate 6 is cut, for example as illustrated in figure 2 with sketched lines, to form four tiles 1 by means of a diamonded wheel with a water jet.

The plates 6 or tiles 1 may then pass into a polishing station 24 and subsequently into a drying station 25.

After drying, the plates 6 are overturned and deposited with the lower or base side thereof 2 in a positioning station 26 (figure 12) at the inlet of the third or last section D of the plant B comprising a conveyor belt 27. The plates 6 then arrive at a station 28 for applying a thin layer of particularly hard synthetic material 29, for example polyurethane resin, onto the upper face 5 of the tile 1, that is onto the layer of epoxy resin 4 (figure 13). A transferring of the plates 6 into an adjacent hardening oven 30 then follows, wherein the hardening of the polyurethane resin layer takes place in a few minutes.

From the oven 30 the plates 6 arrive at a station 31, wherein a film of peelable protection 32, for example of transparent polyethylene, is applied onto the polyurethane resin 29 (figure 14).

From the station 31 the plates 6 or tiles 1 are then transferred to a not illustrated storage station, with plates 6 or tiles 1 in the laying or installation position thereof (figure 14).

The method steps illustrated in the second section or cut line C of the plant B can be implemented advantageously with apparatuses known on themselves in the industry for processing stones and marble and, therefore, they are not described more in detail.

In the illustrated plant B implementing the different steps of the proposed exemplifying method, operators in different stations can be used or the different steps or operating stations can be automatized partially or totally.

From the above structural and functional description of the plant for performing the steps of the method according to the invention, of the proposed trays and of the plates/tiles obtained according to the invention, it is noted that with the teachings according to the invention the designated object is solved efficiently and the mentioned advantages are obtained.

In particular plates/tiles are obtained which have not the drawbacks of the known art and this with a method, plant and trays allowing to reduce drastically the manufacturing times.

As the trays of or coated with silicone proposed according to the present invention during the manufacturing of the tiles are not subjected to pressure actions or high temperatures, that is to varying temperatures, substantially they are subjected neither to wear nor to ageing and/or embrittling actions, therefore they have a long duration.

As above mentioned, providing trays comprising a synthetic or metallic supporting body, for example made of plate or aluminium, at least coated on the inside with silicone or other anti-adberent synthetic material, falls within the invention scope as well.

The experts in designing plants with treatment stations surely could introduce modifications and/or variants relating the implementation of the single stations as well as the synchronization thereof or operating cycles, for example controllable by means of computer and related programmes and furthermore they could vary the sequence and the number of the operating steps according to the provided materials, however within the scope of the present invention, as defined in the following claims.

## Claims

1. Tray for forming plates and tiles comprising a layer of inserts or pebbles built-in in a layer of synthetic material, **characterized in that** of being made in anti-adherent synthetic material, without or with a built-in supporting body, made of metal or synthetic material.

2. Tray according to claim 1, **characterized in that** as anti-adherent synthetic material silicone, teflon® or the like are used.

3. Tray according to claim 1, **characterized in that** it shows a tray body made of metal, preferably aluminium, with an anti-adherent coating applied by depression starting from a small bag made of anti-adherent synthetic material tightly put onto the tray body.

4. Method for manufacturing plates/tiles with trays according to one or more of claims 1 to 3, which plates or tiles include a layer of pebbles built-in in a layer of synthetic material, **characterized in that** it provides in combination the following operating steps:
- a step of providing, preferably onto a conveyor belt, a paced sequence of trays,
- a step of inserting into each tray, preferably by means of spraying, a layer or bed of synthetic material, for example of epoxy resin, as component of the plate/tile, onto the tray bottom,
- a step of applying, preferably by transferable fall, pebbles onto the layer or bed of synthetic material,
- a step of levelling the layer of pebbles onto the tray bottom, that is against the future outer side of the plate/tile,
- a step of transferring the trays, preferably from the conveyor belt, to a storage station for hardening the layer or bed of synthetic material,
- a step of storing the trays for the time necessary for hardening the layer or bed of synthetic material,
- a step of extracting the plate by overturning the tray and with the plate in position for the subsequent calibration for determining the thickness, and
- in case of manufacturing a plate for manufacturing tiles, a step of cutting the plate for obtaining smaller plates or single tiles by means of a diamonded grinding wheel with a water jet,
- a step of polishing the tiles, that is plates,
- a step of drying the tiles, that is plate,
- a step of overturning the plates/tiles and the overturned position thereof for applying onto the outer side thereof, synthetic material side, a thin layer of resin with high hardness features, that is scratch-resistant features, preferably of polyurethane resin,
- a step of hardening in oven the scratch-resistant layer, as well as
- a step of applying a peelable protection film onto the outer side of the scratch-resistant layer and subsequent packaging of the plates/tiles.

5. Method according to claim 4, **characterized in that** it comprises a combination at will of the steps provided in claim 4 depending upon the materials and finishes of the plates or tiles.

6. Plant for manufacturing plates/tiles comprising a layer of pebbles built-in in a layer of synthetic material, apt to implement the method according to claims 4 and 5, **characterized in that** it comprises a plurality of trays for moulding or forming plates/tiles according to one or more of the claims 1 to 3, as well as,
arranged in sequence, preferably onto a controllable conveyor belt:
- a first station for inserting a layer or bed of synthetic material, preferably of epoxy resin, onto the bottom each time of a sieve,
- a second station for inserting a layer of pebbles onto the layer or bed of synthetic material in the tray,
- a third station of levelling the layer of pebbles towards the bottom of the tray,
- a support of the trays, containing a layer of synthetic material and the layer of pebbles, coming from the conveyor belt,
wherein a storage station for hardening the layer or bed of synthetic material of plates/tiles in the trays is associated to the plant.

7. Plant according to claim 6, **characterized in that** it further comprises, at least onto a conveyor belt:
a station for extracting the plates from the trays with subsequent arrangement thereof onto the side opposite to the pebbles onto the conveyor belt with subsequent calibration station to determine the wished thickness of the plates by means of abrasion of the bottom of the layer of pebbles, and
- in case of manufacturing plates, a station for cutting said plates for obtaining smaller plates or single tiles, as well as by means of a diamonded wheel with a water jet,
- a station for polishing the cut plates or tiles,
- a subsequent station for drying the plates/tiles,
- a station for overturning the plates/tiles onto the pebble side thereof with a subsequent station for applying a thin hard layer of synthetic material onto the side of the synthetic material of the plates/tiles,
- a heating oven for hardening the thin layer of hard synthetic material, preferably polyurethane resin,
- a station for applying a peelable protection film, for example of transparent polyethylene, onto said thin layer of hard synthetic material, with a subsequent storage station.

8. Plant according to one or more of the claims 6 to 7, **characterized in that** the station for applying the layer or bed of epoxy resin or the like comprises a support for a spray gun mounted mobile for comings and goings both transversally and longitudinally with respect to the mobile belt above said mobile belt,
**in that** the station for loading the pebbles comprises a belt for feeding and discharging by gravity the pebbles arranged above the mobile belt and in turn mobile in the longitudinal direction of said underlying mobile belt, and/or
**in that** in the station for levelling the pebbles the levelling action takes place with a rammer moved manually or by means of a cylinder/piston unit supported with vertical axis above the mobile belt.

9. Plant according to one or more of the claims 6 to 8, **characterized in that** the support of the trays coming from the levelling station is formed by a rack-like carriage having a plurality of supporting planes overlapped in a spaced way, which carriage can be transferred manually or onto guiding rails connecting the levelling station to the storage station, and/or
**in that** the storage station provides a chessboard-like arrangement of the carriages supporting the plates/tiles, preferably along three rows.

10. Plant according to one or more of the claims 6 to 9, **characterized in that** it comprises a combination at will of the stations provided in one or more of claims 6 to 9 depending upon the materials and finishes provided for the plates or tiles.

11. Plates or tiles comprising a layer of pebbles built-in in a layer or bed of synthetic material, **characterized in that** they are manufactured with trays, and/or with a method and/or with a plant according to one or more of the claims 1 to 10.
